# EUROPÄISCHE PATENTSCHRIFT

(11) **EP 2 707 627 B1**
(45) Veröffentlichungstag und Bekanntmachung des Hinweises auf die Patenterteilung: **31.08.2016**
(21) Anmeldenummer: 12724550.4
(22) Anmeldetag: 14.03.2012
(51) Int. Cl.: F16J 9/20, F02F 5/00

(54) **KOLBENRING FÜR 2-TAKTMOTOREN**
PISTON RING FOR TWO-STROKE ENGINES
SEGMENT DE PISTON POUR MOTEURS A DEUX TEMPS

(30) Priorität: 10.05.2011 DE 102011101094; 09.01.2012 DE 102012000241
(43) Veröffentlichungstag der Anmeldung: 19.03.2014
(73) Patentinhaber: Federal-Mogul Burscheid GmbH, 51399 Burscheid (DE)
(72) Erfinder: MITTLER, Richard, 42799 Leichlingen (DE)
(74) Vertreter: Döpp, Ludger
(86) Internationale Anmeldenummer: PCT/DE2012/000263
(87) Internationale Veröffentlichungsnummer: WO 2012/152240

(56) Entgegenhaltungen:
- DE-A1- 3 428 007
- FR-A- 1 064 856
- GB-A- 233 401
- JP-A- 2007 077 988

## Beschreibung

2-Takt Schiffsmotoren haben im Gegensatz zu 4-Takt Motoren das Problem, dass die Ölzufuhr zur Schmierung und damit zur Reduzierung des Verschleißes über Öleinspritzsysteme erfolgen muss. Diese Systeme müssen zu einem geeigneten Zeitpunkt genug Öl zur Verfügung stellen, so dass eine ausreichende Schmierung der Zylinderoberfläche / Kolbenringe gewährleistet ist. Hierbei ist bei allen bekannten Systemen einheitlich, dass die Ölzufuhr unter den Bedingungen des Gasgegendruckes erfolgen muss. Unter Berücksichtigung, dass moderne Schiffsmotoren mit Drehzahlen von ungefähr 100 min⁻¹ bei bis zu 2500 mm Hub betrieben werden, ist die Zeiteinheit der Ölverteilung sehr schwierig zu gestalten. Bei einem Kolben-Kolbenring-System mit 900 mm Durchmesser und einem Ölzufuhrsystem mit etwa 8 Zugängen auf den Umfang verteilt, ergibt sich in Umfangsrichtung eine eigenständige Ölverteilung durch die eingebauten Komponenten (Kolbenringe) von ca. 350 mm.

Hierbei zeigt sich, dass eine konventionelle Kolbenringauslegung durch nicht vorhandene Druckunterschiede am Umfang nur maximal 3 % zur Verteilung der Ölmenge beisteuert.

Es wurden bisher Ölzufuhrsysteme entwickelt, die trotz hohem Gegendruck eine schnellere Ölverteilung beim Zuführen gewährleisten sollen. Komplexe Kolben-Kolbenring-Systeme zur Unterstützung einer besseren Ölverteilung, die in der Realität nur schwer umsetzbar sind, sind bis dato nicht bekannt.

Die US 6, 536, 385 B1 offenbart einen Kolbenring, der laufflächenseitig mit geometrisch unterschiedlich ausgebildeten Profilen versehen ist. Dieser Kolbenring ist insbesondere für die Ölschmierung von 2-Taktmaschinen einsetzbar. In einem Kolben-Kolbenringsystem kommen übereinander angeordnete Kolbenringe zum Einsatz, die eine ballig ausgebildete Lauffläche aufweisen, wobei der Kolbenring zur Aufnahme in einer entsprechend ausgebildeten Kolbenringnut, zumindest im Bereich seiner, einem Brennraum zugewandten Flankenfläche, konisch ausgebildet ist.

Die DE 10 2006 058 081 A1 offenbart eine 2-Takt Verbrenhungsmaschine, mit zumindest einem Schlitz einer Gassteuerung eines Einlasses und/oder eines Auslasses, wobei ein Spalt zwischen einem Hubkolben und einer den Hubkolben umgebenden Lauffläche abgedichtet ist, wobei eine Kombinationsdichtung zur Abdichtung des Spaltes in der Lauffläche angeordnet ist, über die der Hubkolben entlanggleitet, dergestalt, dass die Kombinationsdichtung zum einen eine Gasdichtungsfunktion und zum anderen eine Ölabstreiffunktion aufweist.

Der GB 233,401 ist eine Packung für Kolben zu entnehmen. Es werden Ringe mit unterschiedlichen Profilen im Bereich der Lauffläche beschrieben. Mindestens zwei dieser Ringe werden in einer einzigen Kolbennut eingesetzt.

In der JP 2007-077988 wird ein aus mehreren Kolbenringen bestehendes Kolbenringsystem beschrieben, wobei ein jeder Kolbenring in einer ihm zugehörigen Nut angeordnet ist. Es werden für jeden Kolbenring unterschiedliche Laufflächenprofilierungen angesprochen.

Durch die DE 34 28 007 A1 ist ein Kolben mit spezieller Formgebung und Kolbenringbestückung bekannt geworden. Auch hier wird ein mehrteiliges Kolbenringsystem beschrieben, wobei einzelne Kolbenringe in einzelnen Kolbennuten angeordnet sind. Die Laufflächen sind mit unterschiedlichen Konturen versehen.

Ein ähnliches Kolbenringsystem wird in der FR 1064856 beschrieben. Auch hier ist ein jeder Kolbenring in einer zugehörigen Nut positioniert. Die Laufflächenbereiche der einzelnen Ringe sind unterschiedlich profiliert.

Der Erfindung liegt die Aufgabe zugrunde ein Kolben-Kolbenring-System zu schaffen, bei dem eine gleichmäßigere Ölverteilung über die gesamte Lauffläche der Kolbenringe, in Umfangsrichtung gesehen, erzeugt wird, wobei auch die absolute Ölmenge reduziert werden soll.

Darüber hinaus soll eine bessere Vermischung von altem und neuem Öl im System herbeigeführt werden.

Diese Aufgabe wird erfindungsgemäß gelöst durch ein Kolbenringsystem für einen Kolben einer 2-Takt Brennkraftmaschine, mit einem Innendurchmesser > 400 mm, mit einer balligen Lauffläche sowie einem Scheitelpunkt der Balligkeit und einem mit einer Zylinderwand in Kontakt stehenden tragenden Bereich, bestehend aus einem ersten Kolbenring, einem zweiten Kolbenring sowie einem zwischen erstem und zweitem Kolbenring vorgesehenen dritten Kolbenring, wobei der erste Kolbenring einem Brennraum zugewandt ist und der zweite Kolbenring axial unterhalb des ersten Kolbenrings angeordnet ist, und wobei der Scheitelpunkt der Balligkeit des ersten Kolbenrings, gemessen von seiner unteren Flankenfläche, unterhalb der Kolbenringmitte und der Scheitelpunkt des zweiten Kolbenrings, gemessen von seiner unteren Flankenfläche, oberhalb der Kolbenringmitte angeordnet ist, und wobei der dritte Kolbenring mit einem balligen Laufflächenprofil versehen ist, welcher einen Scheitelpunkt der Balligkeit aufweist, der dem Scheitelpunkt des zweiten Kolbenrings entspricht.

Vorteilhafte Ausgestaltungen der Erfindung sind den Unteransprüchen zu entnehmen.

Im Gegensatz zu den bekannten Konstruktionen wird durch eine sinnvolle Abstimmung der physikalischen Verhältnisse die Funktionalität des Kolben-Kolbenring-Systems, insbesondere im Hinblick auf die Ölverteilung in Umfangsrichtung, optimiert. Hierbei werden sowohl die Druckverhältnisse als auch die Funktionsweise der einzelnen Kolbenringe zueinander neu bestimmt, um eine möglichst große Umfangsverteilung des Öles je Hub zu gewährleisten.

Hierzu wird ein Kolben-Kolbenring-System vorgeschlagen, das eine Reduzierung der Anzahl der Kolbenringe auf ein 3-Ring System ermöglicht, um die notwendigen Druckgradienten zwischen den einzelnen Ringen und damit in der jeweiligen Ringnut zu erreichen, die für die hydrodynamischen Verhältnisse an der Lauffläche des jeweiligen Kolbenrings notwendig sind.

Wesentlicher Bestandteil der Erfindung ist die Auslegung der Pivot-Punkte und der Balligkeiten aller im System beteiligten Kolbenringe.

Unter dem Begriff "Pivotpunkt" versteht der Kolbenringfachmann den radial am äußersten gelegenen Punkt der Balligkeit (Scheitelpunkt) oder auch den maximalen Punkt des Laufflächenprofils oder auch den Umkehrpunkt des Laufflächenprofils.

Hierbei wird der Pivot Punkt der Laufflächenballigkeit des dem Brennraum zugewandten ersten Kolbenrings bei ca. 1/3, ausgehend von seiner unteren Flankenfläche, bestimmt und die Rücknahmen unter- und oberhalb des Pivotpunkts so ausgelegt, dass der Druckgradient vor und hinter dem Ring einen Faktor von 85% aufweist. Der Pivot-Punkt des dem Ölraum zugewandten zweiten Kolbenrings ist entgegengesetzt zum ersten Kolbenring ausgelegt, d.h., von dessen unterer Flankenfläche aus gesehen liegt der Scheitelpunkt etwa auf einer 2/3 Höhe der gesamten Höhe des zweiten Kolbenrings. Durch die vorgeschlagene Form des ersten und zweiten Rings werden die ins Ringsystem eingebrachten Ölmengen nicht, wie herkömmlich, von den bisher eingesetzten Ringen im Aufwärtshub überlaufen, sondern es bildet sich eine Ölmenge, die durch die erfindungsgemäße Balligkeit und entsprechend ausgelegten Pivot-Punkte zum oberen Totpunkt transportiert und der hier entstehenden Druckverhältnisse im Zwischenringvolumen eine Umfangsverteilung erfährt.

Durch die Auslegung des ersten Rings mit einer definierten Balligkeit und Pivot-Punkt Lage etwa im unteren Drittel der Ringlauffläche wird die im Aufwärtshub bereitgestellte Ölmenge hydrodynamisch überlaufen und die überschüssige Menge zurück ins Ringsystem transportiert. Am unteren Umkehrpunkt werden die Ölmengen wieder, soweit nicht durch die Spülschlitze der Zweitaktmaschine verloren, für den nächsten Hub zurück ins Ringsystem transportiert.

Das Kolbenringsystem besteht aus drei Kolbenringen, wobei der dritte Kolbenring axial zwischen erstem und zweitem Kolbenring positioniert ist. Einem weiteren Gedanken der Erfindung gemäß wird die Lauffläche dieses dritten Kolbenrings ebenfalls ballig ausgeführt, wobei die Laufflächenkontur des dritten Kolbenrings im Wesentlichen derjenigen des zweiten Kolbenrings entspricht.

Der Erfindungsgegenstand ist anhand eines Ausführungsbeispiels in der Zeichnung dargestellt und wird wie folgt beschrieben. Es zeigen:
- Figur 1: Prinzipskizze eines erfindungsgemäßen Kolben-Kolbenring-Systems;
- Figur 2: Teildarstellung des dem Brennraum zugewandten Kolbenrings des Systems gemäß Figur 1;
- Figur 3: Teildarstellung des dem Ölraum zugewandten Kolbenrings des Systems gemäß Figur 1;
- Figur 4: Teildarstellung des in Figur 1 dargestellten mittleren Kolbenrings.

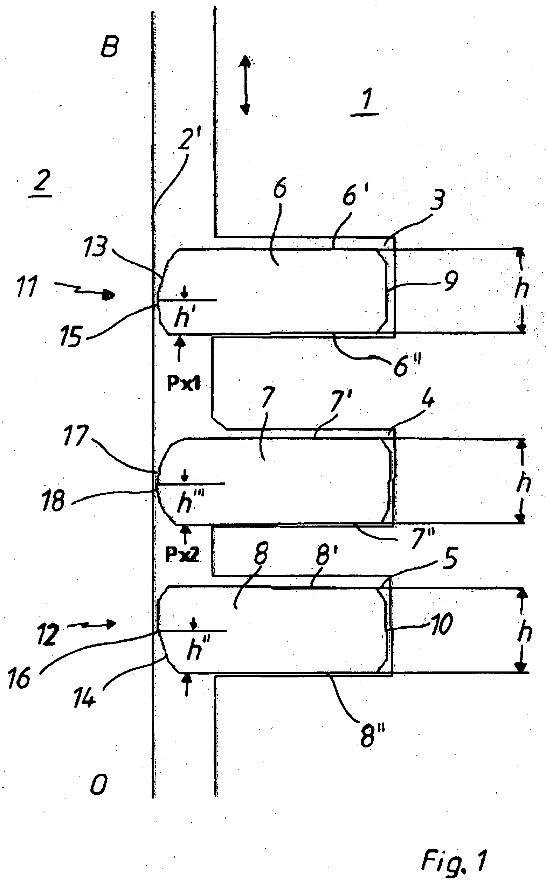

Figur 1 zeigt als Prinzipskizze ein erfindungsgemäßes Kolben-Kolbenring-System. Vereinfacht dargestellt ist ein Kolben 1, ein selbigen umgebender Zylinder 2, bedarfsweise als Zylinderlaufbuchse ausgebildet. Der Kolben 1 beinhaltet in diesem Beispiel mehrere Kolbenringnuten 3,4,5. In den Kolbenringnuten 3,4,5 sind Kolbenringe 6,7,8 eingesetzt.

Die Kolbenringe 6,8 beinhalten obere und untere Flankenflächen 6',8' sowie untere Flankenflächen 6",8". Jeder der beiden Kolbenringe 6,8 weist eine innere Umfangsfläche 9,10 mit einem Durchmesser > 400 m auf. Das erfindungsgemäße Kolben-Kolbenring-System ist einsetzbar in einer Zweitaktbrennkraftmaschine, bevorzugt in einem Schiffsdieselmotor. Die Kolbenringe 6,8 weisen jeweils eine Lauffläche 11,12 auf, die mit einer Zylinderwand 2' des umgebenden Zylinders 2, respektive einer Laufbuchse, in Wirkverbindung stehen. Die Laufflächen 11,12 sind mit einem balligen Profil 13,14 versehen. Der einem Brennraum B zugewandte Kolbenring 6 ist mit einer derart ballig ausgestalteten Lauffläche 13 versehen, dass ein Scheitelpunkt 15 (Pivot-Punkt) gebildet wird, der, bezogen auf seine untere Flankenfläche 6", auf einer axialen Höhe h' von etwa 1/3 der gesamten axialen Bauhöhe h des Kolbenrings 6 liegt. Der einem Ölraum O zugewandte Kolbenring 8 ist bezüglich seines balligen Profils 14 gegenüber dem Kolbenring 6 andersartig ausgebildet. Auch dieser Kolbenring 8 beinhaltet einen Scheitelpunkt 16 (Pivot-Punkt), der, bezogen auf seine untere Flächenfläche 8", axial oberhalb der Kolbenringmitte, vorzugsweise auf 2/3 der Gesamtbauhöhe h des Kolbenrings 8, angeordnet ist. Die erfindungsgemäß gewählten gegensätzlich ausgebildeten Laufflächenballigkeiten 13,14 der Kolbenringe 6 und 8 bewirken eine optimale Ölverteilung in Umfangsrichtung, sowohl bei der Aufwärts- als auch bei der Abwärtsbewegung des Kolbens 1.

Axial zwischen den Kolbenringen 6 und 8 ist ein weiterer Kolbenring 7 vorgesehen, der ebenfalls ein balliges, Laufflächenprofil 17 aufweist. Auch dieser Kolbenring 7 weist eine obere 7' und eine untere Flankenfläche 7" auf. Der Scheitelpunkt 18 der Balligkeit ist axial oberhalb der halben axialen Bauhöhe h"', immer bezogen auf seine gesamte Bauhöhe h, vorgesehen.

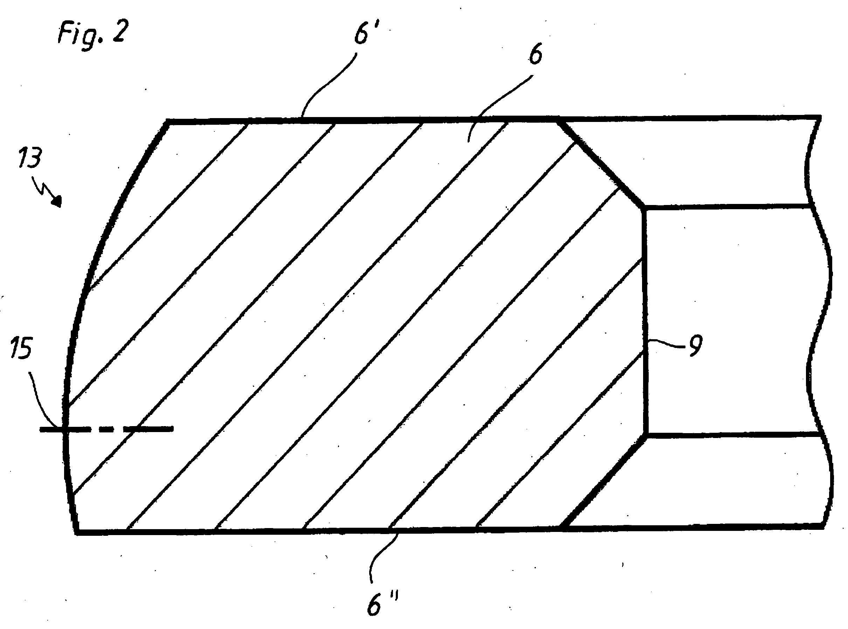

Figur 2 zeigt den dem Brennraum B (Figur 1) zugewandten Kolbenring 6, wobei der Scheitelpunkt 15 der ballig ausgebildeten Lauffläche 13 durch die gestrichelte Linie hervorgehoben ist. Ebenfalls erkennbar sind die innere Umfangsfläche 9, die obere Flankenfläche 6' sowie die untere Flankenfläche 6".

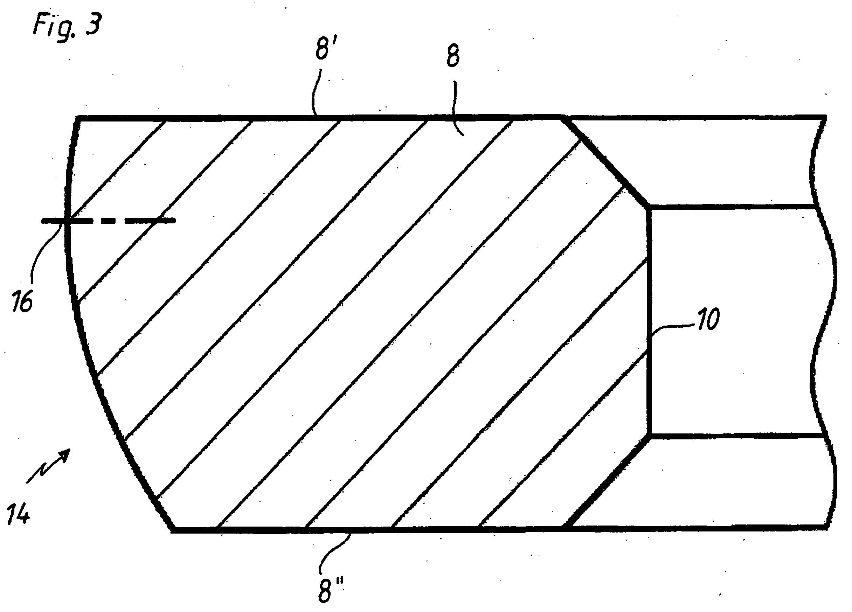

Figur 3 zeigt den Kolbenring 8, wobei auch hier der Scheitelpunkt 16 des ballig ausgebildeten Profils 14 durch die gestrichelte Linie hervorgehoben ist. Ebenfalls erkennbar sind die innere Umfangsfläche 10, die obere Flankenfläche 8' sowie die untere Flankenfläche 8".

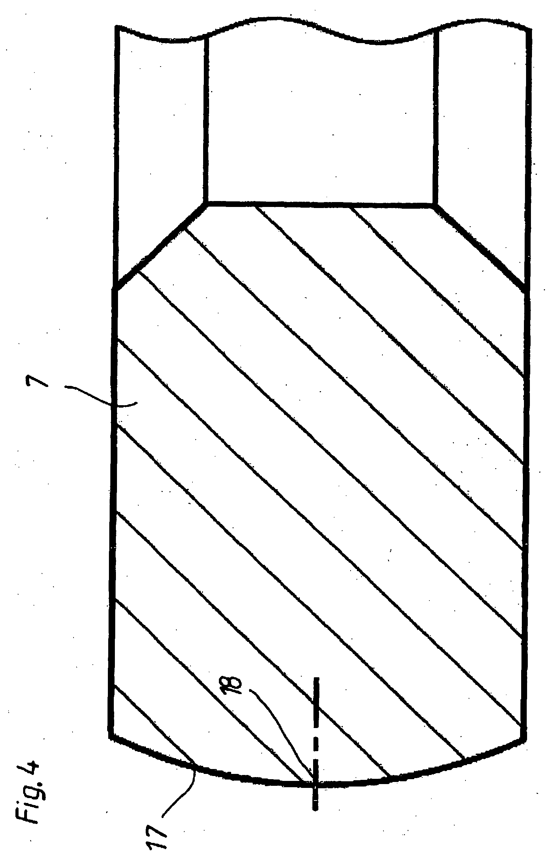

Figur 4 zeigt den Kolbenring 7, der in Analogie zu Figur 1 ebenfalls ein balliges Laufflächenprofil 17 beinhaltet, dessen Scheitelpunkt 18 in diesem nicht erfindungsgemäßen Beispiel etwa auf halber axialen Bauhöhe dieses Kolbenrings 7 vorgesehen ist. Ebenfalls erkennbar sind die innere Umfangsfläche, die obere Flankenfläche 7' sowie die untere Flankenfläche 7".

## Patentansprüche

1. Kolbenringsystem für einen Kolben (1) einer 2-Takt Brennkraftmaschine, mit einem Innendurchmesser > 400 mm, mit einer balligen Lauffläche sowie einem Scheitelpunkt der Balligkeit und einem mit einer Zylinderwand (2') in Kontakt stehenden tragenden Bereich, bestehend aus einem ersten Kolbenring (6), einem zweiten Kolbenring (8) sowie einem zwischen erstem und zweitem Kolbenring (6,8) vorgesehenen dritten Kolbenring (7), wobei der erste Kolbenring (6) in eingebautem Zustand einem Brennraum (B) zugewandt ist und der zweite Kolbenring (8) axial unterhalb des ersten Kolbenrings (6) angeordnet ist, und wobei der Scheitelpunkt (15) der Balligkeit (13) des ersten Kolbenrings (6), gemessen von seiner unteren Flankenfläche (6"), unterhalb der Kolbenringmitte und der Scheitelpunkt (16) des zweiten Kolbenrings (8), gemessen von seiner unteren Flankenfläche (8"), oberhalb der Kolbenringmitte angeordnet ist, und wobei der dritte Kolbenring (7) mit einem balligen Laufflächenprofil (17) versehen ist, welcher einen Scheitelpunkt (18) der Balligkeit aufweist, der dem Scheitelpunkt (16) des zweiten Kolbenrings (8) entspricht.

2. Kolbenringsystem nach Anspruch 1, **dadurch gekennzeichnet, dass** der Scheitelpunkt des ersten Kolbenrings (6), ausgehend von seiner unteren Flankenfläche (6") auf einer Höhe (h') liegt, die bei etwa 20 bis 40 % der gesamten Bauhöhe (h) des Kolbenrings (6) liegt.

3. Kolbenringsystem nach Anspruch 2, **dadurch gekennzeichnet, dass** der Scheitelpunkt (15) bei etwa 30 % der Kolbenringhöhe (h) liegt.

4. Kolbenringsystem nach einem der Ansprüche 1 bis 3 , **dadurch gekennzeichnet, dass** der Scheitelpunkt (16) des zweiten Kolbenrings (8), ausgehend von seiner unteren Flankenfläche (8") auf einer Höhe (h") liegt, die bei etwa 60 bis 80 % der gesamten Bauhöhe (h) des Kolbenrings (8) liegt.

5. Kolbenringsystem nach Anspruch 4, **dadurch gekennzeichnet, dass** der Scheitelpunkt (15) bei etwa 70 % der Kolbenringhöhe (h) liegt.

## Claims

1. A piston ring system for a piston (1) of a two-stroke engine, comprising an inner diameter of > 400 mm, comprising a crowned bearing surface as well as an apex of the crowning and a supporting area which is in contact with a cylinder wall (2'), composed of a first piston ring (6), a second piston ring (8) as well as a third piston ring (7) provided between the first and the second piston ring (6, 8), wherein, when installed, the first piston ring (6) is facing a combustion chamber (B) and the second piston ring (8) is placed axially beneath the first piston ring (6), and wherein the apex (15) of the crowning (13) of the first piston ring (6), measured from the lower flank surface (6") thereof, is arranged beneath the piston ring center and the apex (16) of the second piston ring (8), measured from the lower flank surface (8") thereof, is arranged above the piston ring center, and wherein the third piston ring (7) is provided with a crowned bearing surface profile (17), which comprises an apex (18) of the crowning that corresponds to the apex (16) of the second piston ring (8).

2. A piston ring system according to claim 1, **characterized in that** the apex of the first piston ring (6), starting from the lower flank surface (6") thereof, is placed at a height (h') which is about 20 to 40 % of the overall height (h) of the piston ring (6).

3. A piston ring system according to claim 2, **characterized in that** the apex (15) is placed at a height which is about 30 % of the piston ring height (h).

4. A piston ring system according to one of the claims 1 through 3, **characterized in that** the apex (16) of the second piston ring (8), starting from the lower flank surface (8") thereof, is placed at a height (h") which is about 60 to 80 % of the overall height (h) of the piston ring (8).

5. A piston ring system according to claim 4, **characterized in that** the apex (15) is placed at a height which is about 70 % of the piston ring height (h).

## Revendications

1. Système de segment de piston pour un piston (1) d'un moteur à deux temps, comprenant un diamètre intérieur de > 400 mm, comprenant une surface de roulement de forme bombée ainsi qu'un sommet du bombement et une zone portant qui est en contact avec une paroi de cylindre (2'), composé d'un premier segment de piston (6), d'un deuxième segment de piston (8) ainsi que d'un troisième segment de piston (7) prévu entre le premier et le deuxième segment de piston (6, 8), le premier segment de piston (6), à l'état monté, faisant face à une chambre de combustion (B) et le deuxième segment de piston (8) étant disposé axialement au-dessous du premier segment de piston (6), le sommet (15) du bombement (13) du premier segment de piston (6), mesuré à partir de la surface de flanc inférieure (6") de celui-ci, étant disposé au-dessous du centre de segment de piston et le sommet (16) du deuxième segment de piston (8), mesuré à partir de la surface de flanc inférieure (8") de celui-ci, étant disposé au-dessus du centre de segment de piston, et le troisième segment de piston (7) étant muni d'un profil de surface de roulement en forme bombée (17), lequel comprend un sommet (18) du bombement qui correspond au sommet (16) du deuxième segment de piston (8).

2. Système de segment de piston selon la revendication 1, **caractérisé en ce que** le sommet du premier segment de piston (6), à partir de sa surface de flanc inférieure (6"), se trouve à une hauteur (h') qui correspond environ à 20 à 40 % de la hauteur entière de construction (h) du segment de piston (6).

3. Système de segment de piston selon la revendication 2, **caractérisé en ce que** le sommet (15) se trouve à une hauteur qui correspond environ à 30 % de la hauteur de segment de piston (h).

4. Système de segment de piston selon l'une des revendications 1 à 3, **caractérisé en ce que** le sommet (16) du deuxième segment de piston (8), à partir de sa surface de flanc inférieure (8"), se trouve à une hauteur (h") qui correspond environ à 60 à 80 % de la hauteur entière de construction (h) du segment de piston (8).

5. Système de segment de piston selon la revendication 4, **caractérisé en ce que** le sommet (15) se trouve à environ 70% de la hauteur de segment de piston (h).
